# EUROPEAN PATENT APPLICATION

(11) **EP 1 698 962 A2**
(43) Date of publication of application: **06.09.2006**
(21) Application number: 04819776.8
(22) Date of filing: 25.11.2004
(51) Int. Cl.: G06F 3/00

(54) **HUMAN INTERFACE DEVICE AND HUMAN INTERFACE SYSTEM**

(30) Priority: 02.12.2003 JP 2003403626
(71) Applicant: Olympus Corporation, Tokyo 151-0072 (JP)
(72) Inventor: MIYOSHI, Takashi c/o Olympus Int. P.S. Co., Ltd, Tokyo 192-8512 (JP); IWAKI, Hidekazu c/o Olympus Int. P.S. Co., Ltd, Tokyo 192-8512 (JP); KOSAKA, Akio c/o Olympus Int. P.S. Co., Ltd, Tokyo 192-8512 (JP)
(74) Representative: von Hellfeld, Axel
(86) International application number: PCT/JP2004/017457
(87) International publication number: WO 2005/055029

(57) **Abstract**

A human interface equipment includes an outer shell 2. A photographing device 5 is arranged inside the outer shell 2 and photographs a neighborhood of the outer shell 2 via a photographing optical system 4. A variation recognition device 38 recognizes a variation in an image photographed by the photographing device 5.

## Description

### Technical Field

This invention relates to a human interface equipment, for example, a human interface equipment and human interface system which inputs contact distribution and force by a hand and fingers.

### Background Art

Conventionally, various types of human interface equipments which input contact distribution and force by hands and fingers are known. For example, in Jpn. Pat. Appln. KOKAI Publication No. 2002-132432, tactile sense was input/output by burying a bending sensor in a resilient body having particle-like substances filled therein and causing clay-like behavior. Further, for example, as indicated in Jpn. Pat. Appln. KOKAI Publication No. 2001-34410, a means is provided to estimate the feeling of an operator by providing a physical pressure sensor in a mouse or joy stick, measuring the force applied by the grasping and subjecting the strength and frequency thereof to a statistical process.

For example, for authentication or the like of a fingerprint, a portion whose reflection state is changed by depressing a finger on the total reflection surface of a glass prism is detected as a fingerprint. Further, as indicated in US Patent Specification No. 5757360, the technique for generating an operation command for a character in an image screen according to transition of a three-dimensional position of an interface is provided.

Further, for example, as indicated in US Patent Specification No. 5757360, a means which has a three-dimensional position sensor and inputs a three-dimensional shape and position/pose by use of it is known. Further, for example, as indicated in Jpn. Pat. Appln. KOKAI Publication No. 2003-187235, an individual authentication equipment which photographs a venous pattern of a finger by use of infrared rays and uses the pattern thereof is known.

Further, as the technique for detecting contact with a hand and fingers by arranging markers to sandwich a gel-like plate in two stages and taking a variation in the position of the marker, the following document is provided.

Japanese Document "Tactile Camera -Formation of an Optical three-dimensional Tactile Sensor having Resiliency-" Kamiyama, Kajimoto, Inami, Kawakami, Tachi, "Development of a Vision-based Tactile Sensor", Trans. of IEEJ Sensors and Micromachines Society, pp 16-22, vol. 123, no. 1, Jan. 2003.

An English document name of the above Japanese document is as follows.

Kamiyama, Kajimoto, Kawakami, Tachi, "Evolution of a Vision-based Tactile Sensor", Proc. of 2004 International Conference on Robotics and Automation, WP-6, April, 2004.

### Disclosure of Invention

In the conventional technique including the concrete examples described above, a point that it is necessary to bury a large number of bending sensors if an attempt is made to precisely grasp the shape and the signal processing thereof becomes extensive cannot be coped with. Further, there is provided a problem that it becomes difficult to get recognition if a shielding member is provided between the camera and a subject.

In addition, in the conventional technique, it is means for detecting a fingerprint and it is impossible to provide estimated input of the position/pose of a hand, fingers and the like and input of force.

Further, in the conventional technique, only the position/pose of a human interface equipment is detected and generation of a command based on the contact distribution of a hand, fingers and the like at this time or the distribution of force cannot be coped with.

Further, in the conventional technique, only the position/pose of a human interface equipment is taken and measurement of the contact distribution of a hand, fingers and the like at this time or the distribution of force cannot be coped with.

Further, in the conventional technique, only authentication is made by inserting a finger into a fixed inserting portion and the individual authentication and the operation of the interface cannot be made compatible in a natural position.

This invention is made to solve the above problems and a first object thereof is to provide a human interface equipment which can recognize a variation in an image without being shielded by a shielding member by use of a small number of sensors.

Further, a second object of this invention is to provide a human interface equipment which can perform authentication and interface by use of the same device.

In order to achieve the above objects, according to one aspect of this invention, there is provided a human interface equipment which includes an outer shell, a photographing device which is placed inside the outer shell and photographs a neighborhood of the outer shell via a photographing optical system, and a variation recognition device which recognizes a variation in an image photographed by the photographing device.

Further, according to one aspect of this invention, there is provided a human interface system which includes a human interface equipment which has an outer shell, a photographing device which is placed inside the outer shell and photographs a neighborhood of the outer shell via a photographing optical system and a variation recognition device which recognizes a variation in an image photographed by the photographing device, and a communication device.

### Brief Description of Drawings

FIG. 1 is a diagram for illustrating the basic concept of a human interface equipment of this invention.
FIG. 2 is a configuration view for illustrating a first embodiment of the human interface equipment of this invention.
FIG. 3 is a view showing a photographing range with illustration of the pattern omitted in the human interface equipment shown in FIG. 2.
FIG. 4 is a block diagram of the human interface equipment of the first embodiment.
FIG. 5 is a view showing the state in which the operator grasps an outer shell with a hand and fingers as an object.
FIG. 6 is a view showing the distribution of portions of the hand and fingers which come in contact with the outer shell 2.
FIG. 7 is a view showing an embodiment in which both are formed for fisheye-photographing.
FIG. 8 is a view showing an example in which an inner shell 17 is placed inside the outer shell 2.
FIG. 9 is a configuration view for illustrating a second embodiment of the human interface equipment of this invention.
FIG. 10 is a block diagram of the human interface equipment of the second embodiment.
FIG. 11 is a view showing the distribution of a contact surface of a hand and fingers.
FIG. 12 is a view showing a modification of the configuration of the present embodiment.
FIG. 13 is a block diagram of a human interface equipment of a third embodiment.
FIG. 14 is a diagram showing the configuration of a venous pattern collating device 23.
FIG. 15 is a configuration view for illustrating a fourth embodiment of the human interface equipment of this invention.
FIG. 16 is a block diagram of the human interface equipment of the fourth embodiment.
FIG. 17 is a view showing a modification of the fourth embodiment.
FIG. 18 is a block diagram of a human interface equipment of a fifth embodiment.
FIG. 19 is a diagram showing the configuration of a command generation device 30.

### Best Mode for Carrying Out the Invention

### (First Embodiment)

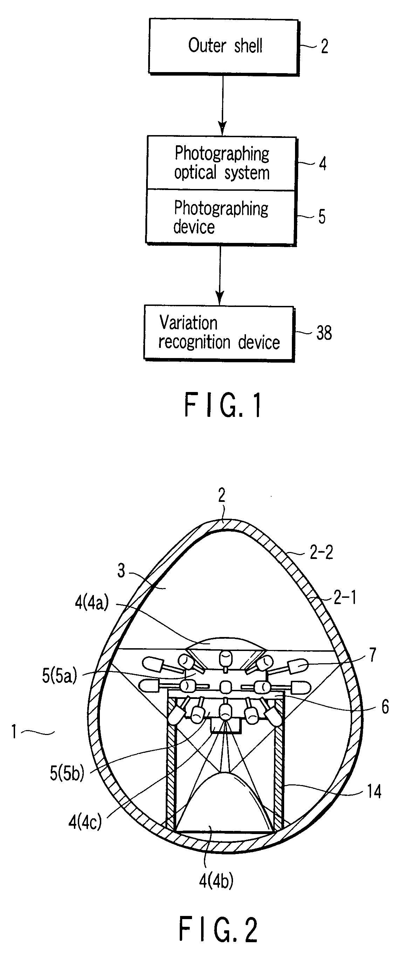

First, the basic concept of a human interface equipment of this invention is explained with reference to FIG. 1. The human interface equipment of this invention includes an outer shell 2, a photographing device 5 which is placed inside the outer shell 2 and photographs a neighborhood of the outer shell 2 via a photographing optical system 4, and a variation recognition device 38 which recognizes a variation in an image photographed by the photographing device 5.

The operation of the above configuration is as follows. Image light from the outer shell 2 is photographed by the photographing device 5 via the photographing optical system 4, converted into an image signal and input to the variation recognition device 38. The variation recognition device 38 recognizes deformation and movement, magnification change, contrast change and the like of a photographed subject image, pattern image or the like based on an input image signal. As the variation recognition device 38, a variation recognition device 8 which measures a variation in a pattern image in a first embodiment which will be described later, a contact surface detecting device 20 which detects touch of the hand and fingers or the like closely adhered to the outer shell 2 in a second embodiment which will be described later and the like are contained.

With the above-described configuration, a human interface equipment which can recognize a variation in an image without being shielded by a shielding member by use of a small number of sensors can be provided.

FIG. 2 is a view showing the first embodiment of a human interface equipment 1 of this invention. The human interface equipment 1 of the present embodiment is configured by an outer shell (in the drawing, the cross-sectional shape is shown) 2 configured by a resilient material, having substantially an egg-shaped form and having an outer shell exterior surface 2-2 and an outer shell interior surface 2-1 on which an outer shell pattern 3 is drawn, an illumination device 7 which illuminates the outer shell pattern 3 of the outer shell interior surface 2-1, photographing optical systems 4 (4a, 4b) which each guide an image of the outer shell pattern 3 in a photographable fashion, photographing devices 5 (5a, 5b) which each photograph an image of the outer shell pattern 3, a substrate 6 to mount the photographing devices 5 (5a, 5b) thereon, and a supporting member 14. The outer shell pattern 3 drawn on the outer shell interior surface 2-1 has the known size and interval of a lattice, dots or the like and is formed by printing, engrave or the like.

In the present embodiment, the photographing optical system 4a is configured by a fisheye lens having an image angle of approximately 180 degrees so that the upper photographing device 5a can substantially perform omnimax photographing. On the other hand, in relation to the lower photographing device 5b, a so-called omnimax optical system configured by a photographing optical system (in this example, a reflection mirror) 4b having a convex hyperboloidal shape and an image-forming optical system 4c is arranged. The photographing device 5b can perform the panoramic photographing of the full-circumference by having the image-forming optical system which faces thereto in the convex direction.

Each of the above-described elements is mounted on the substrate 6 and supported on the outer shell 2 by the cylindrical supporting member 14 formed of transparent acryl or the like. Thus, the photographing optical systems 4 (4a, 4b) are supported so that the field of view of the photographing optical systems 4 (4a, 4b) can photograph substantially the entire surface of the interior surface of the outer shell 2. When the outer shell 2 is semi-transparent, photographing can be performed by use of natural light, but when light cannot be transmitted or darkness or shielding by the hand and fingers is taken into consideration, it is desirable to use an illumination device 7 as shown in FIG. 2. The illumination device 7 has a white LED or the like.

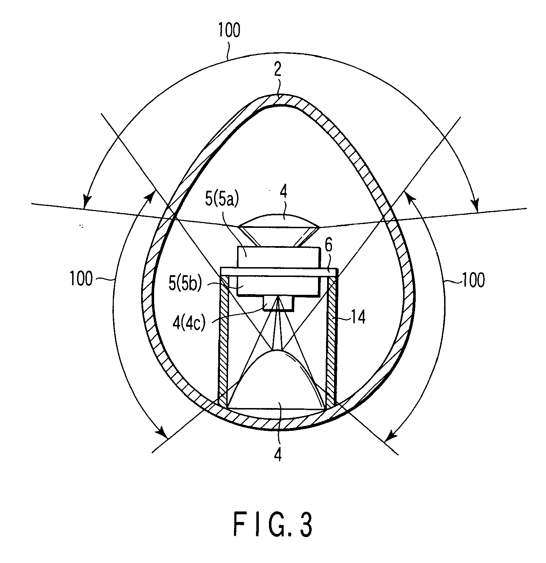

FIG. 3 is a view showing a photographing range with illustration of the outer shell pattern 3 omitted in the human interface equipment 1 shown in FIG. 2. In FIG. 3, a range indicated by broken lines and arrows is a photographing range 100.

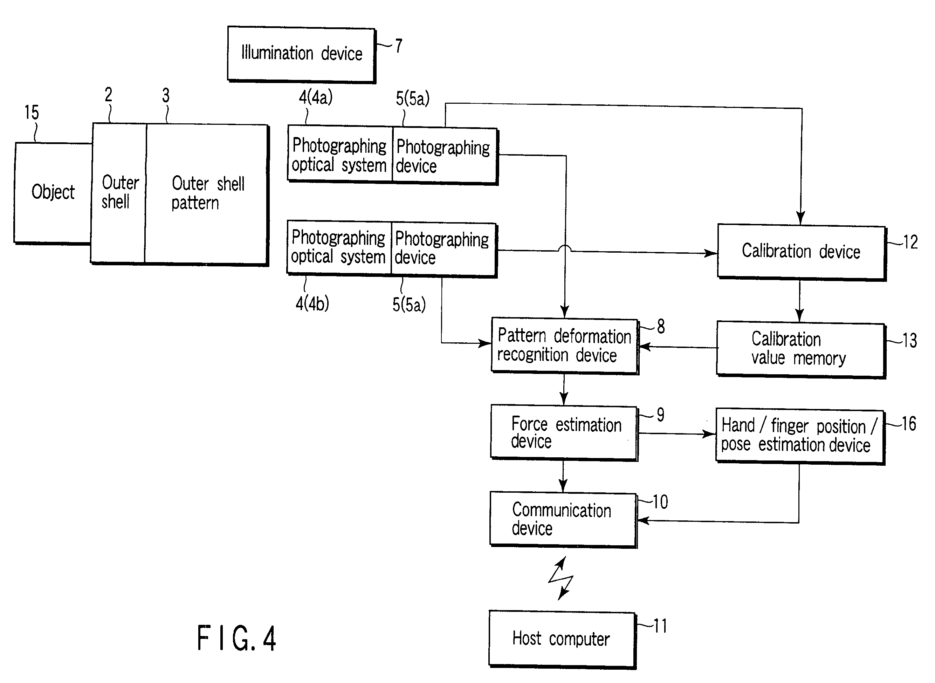

FIG. 4 is a block diagram of the human interface equipment 1 of the first embodiment. The photographing device 5 is connected to a pattern deformation recognition device 8 which measures deformation of the outer shell pattern 3 and connected to a force estimation device 9 which estimates force applied to the outer shell 2 based on the acquired deformation amount. The estimated value from the force estimation device 9 is supplied to a host computer 11 via a communication device 10.

Further, the relation between the deformation amount of the outer shell pattern 3 and the estimated value of the force applied to the outer shell 2 is calculated by a calibration device 12 and the calculated value is stored in a calibration value memory 13.

In the present embodiment, a hand and fingers are a to-be-measured object as an object 15. A hand/finger position/pose estimation device 16 estimates the position/pose of the hand and fingers, receives information from the force estimation device 9 to derive hand/finger position/pose data and transmits the same to the host computer 11 via the communication device 10.

Next, the operation of the above configuration is explained. First, calibration by the calibration device 12 is explained. When the outer shell pattern 3 provided at the known distance is photographed by the photographing device 5, it is photographed in a distorted state even if no force is applied. The initial position/pose relation between the photographing optical system 4, photographing device 5 and outer shell 2 is derived based on the initial distorted image, geometrical information of the outer shell pattern 3 and the approximated shape of the outer shell 2.

Next, specified external force is applied to the outer shell 2 by depressing the object 15 at constant intervals and distortion of the outer shell pattern 3 caused by this is photographed by the photographing device 5. A distortion amount is calculated based on an increase or decrease of the pattern interval, a bending amount of the lattice line, optical flow and the like in the distorted image. A deformation amount in the normal direction on a local area of the outer shell 2 is calculated based on the distortion amount and the relation between the external force and the deformation amount is calibrated. Further, as the relations, the relation between the photographing optical system 4, photographing device 5 and the distortion amount can be used. The result of calibration is stored in the calibration value memory 13.

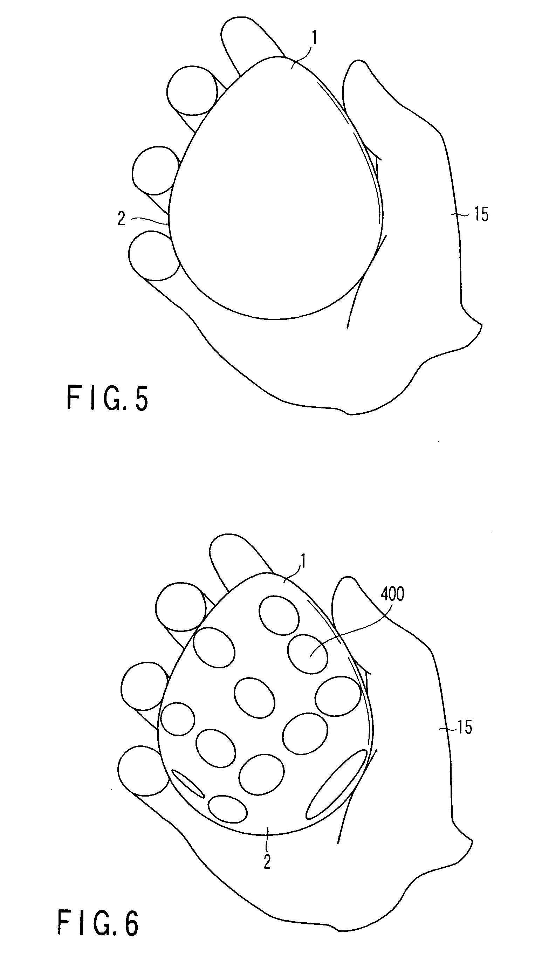

Next, the practical application of the human interface equipment 1 is explained. FIG. 5 shows the state in which the operator grasps the outer shell 2 with a hand and fingers used as the object 15. A portion 400 in which the hand and fingers touch the outer shell 2 is distributed as shown in FIG. 6 and the pattern of the contact portion 400 is deformed when receiving external force by the hand and fingers.

At the measurement time of the pattern deformation recognition device 8, the degree of weight added to the outer shell 2 by an influence of the external force is calculated by adding constant weights to respective measurement points and substituting them into the correlation between the calibrated deformation amount and external force. By outputting this as a map on the outer shell 2, pressure distribution caused by grasping with the hand and fingers is output and it is output to the host computer 11 via the communication device 10.

If the fisheye lens as the photographing optical system 4 (4a) performs photographing by fθ lens, that is, equidistant projection when the deformation amount of the outer shell pattern 3 is calculated, an image of the outer shell pattern 3 is uniformly formed in comparison with photographing by a super wide-angle lens in which normal distortion is corrected since the outer shell 2 is a subject of substantially a spherical shell form. Therefore, a variation in the deformation amount at the measurement time can be made small and a variation in the force measurement can be reduced.

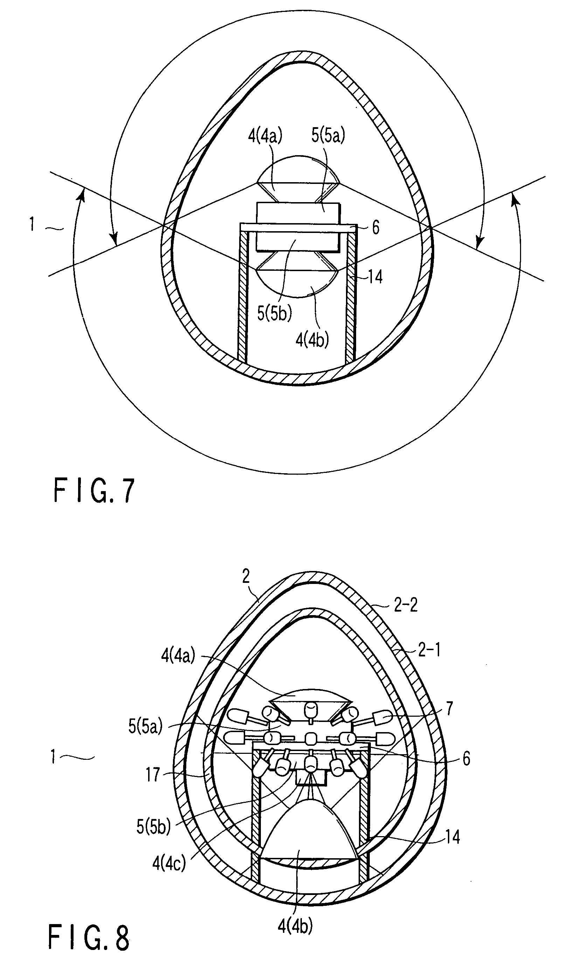

Of course, each configuration of the embodiment of this invention can be variously modified and altered. For example, in the present embodiment, the fisheye lens 4a is used for photographing on the upper portion of substantially the egg-shaped human interface equipment 1 and photographing is performed by the reflection mirror 4b from the side surface to the lower portion, but as shown in FIG. 7, both portions can be configured by fisheye lenses for photographing. Further, the configuration is made to communicate with the host computer 11 by use of the communication device 10, but the host computer 11 can be contained, and in this case, the communication device 10 can be omitted.

Further, in directly transmitting an image signal to the host computer 11, the devices such as the calibration device 12, pattern deformation recognition device 8 and force estimation device 9 can be provided in the host computer 11. As the communication device 10, radio communication such as bluetooth or IEEE 802.11 wireless LAN or wired communication such as IEEE 1394, USB which can also be used as power supply can be used.

Further, a power supply to drive the various types of devices may be attained by containing a secondary battery such as a lithium ion battery charger in the human interface equipment 1, a solar battery or a pendulum generating device can be contained and a power supply can be charged by electromagnetic induction by providing an electromagnetic induction type charging coil.

Further, a deformation amount derived by calibration can be attained by looking up a table between the weight and deformation amount derived based on deformation simulation by strength of materials, FEM.

Further, as shown in FIG. 8, an inner shell 17 which has a configuration harder than the outer shell 2, is configured by a transmission material and is placed with constant distance may be placed inside the outer shell 2. The inner shell 17 has a role of controlling a deformation amount of the outer shell 2 and can protect the illumination device 7 and photographing device 5 from excessive deformation of the outer shell 2.

As the material, for example, relatively soft resin such as silicone rubber, vinyl chloride or the like can be used for the outer shell 2 and relatively hard resin such as acryl, ABS resin, styrene resin or the like can be used for the inner shell 17.

Further, in the present embodiment, deformation of the outer shell 2 is measured by use of the outer shell pattern 3 provided on the outer shell 2, but the configuration can be made to measure deformation of the outer shell 2 by use of a slit, a trigonometrical survey by stripe projection and photographing, three-dimensional measurement by random dot pattern projection and stereo measurement or the like and estimate the pressure distribution or the position/pose of the hand and fingers.

In addition, when the depth of field of an image obtained by the photographing optical system 4 and photographing device 5 lies in a thin range near the outer shell pattern 3 of the outer shell 2, a deformation amount may be estimated by measuring blurring due to defocusing of the pattern by deformation.

### (Second Embodiment)

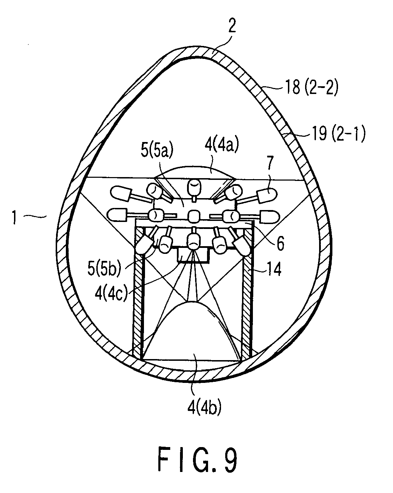

Next, a second embodiment of the human interface equipment of this invention is explained with reference to FIG. 9. A human interface equipment 1 of the present embodiment includes an outer shell 2 which has a diffusion surface 18 on an outer shell exterior surface 2-2 and a transmission surface 19 on an outer shell interior surface 2-1 to permit light to pass therethrough, an illumination device 7 which illuminates the outer shell 2, photographing optical systems 4 which each guide an image of a neighborhood of the outer shell exterior surface 2-2 in a photographable fashion, photographing devices 5 for photographing, a contact surface detecting device (which will be described later) which detects touch of a hand and fingers closely adhered to the outer shell 2 as an image, and a force estimation device (which will be described later) which estimates force applied to the outer shell 2 based on an increase of decrease of the contact surface. The basic configuration of the second embodiment is common to the first embodiment, but they are different in an estimation method of force and to-be-photographed object.

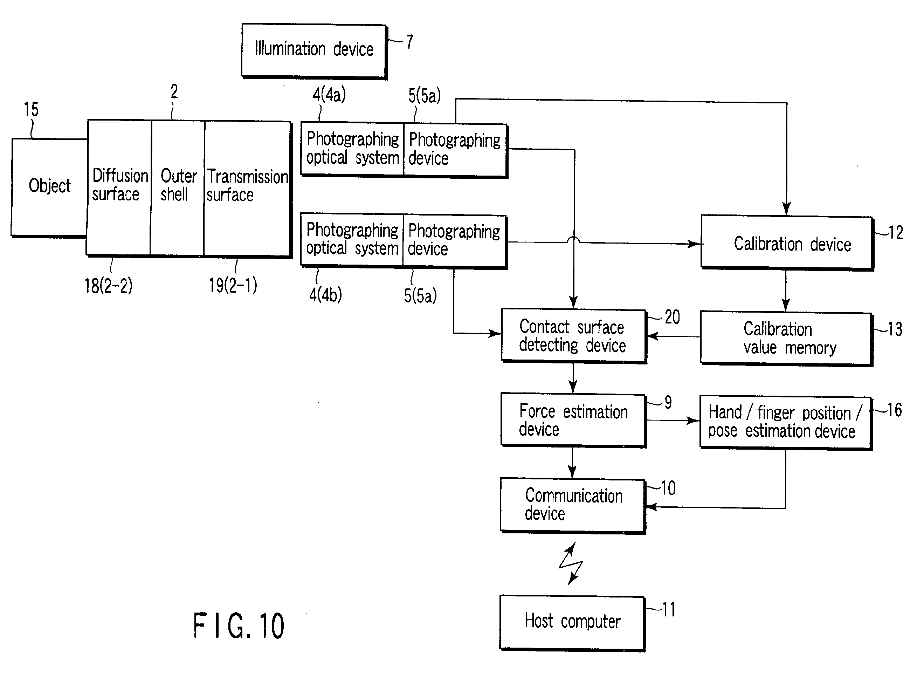

FIG. 10 is a block diagram of the human interface equipment 1 of the present embodiment. A portion different from the block diagram of FIG. 4 which is the first embodiment is that the outer shell 2 has the diffusion surface 18 and transmission surface 19 and includes a contact surface detecting device 20 instead of the pattern deformation recognition device 8.

Next, the operation of the above configuration is explained. The outer shell exterior surface 2-2 of the outer shell 2 of the present embodiment is configured to have the diffusion surface 18 which has fine concave and convex portions on the surface in a so-called frosted glass form. Therefore, an image of an object 15 has low contrast and set in a blurred state until it touches the surface. When the object 15 touches, the contrast is enhanced and a fine structure becomes visible. Particularly, when the object 15 is a hand and fingers, an image component such as fingerprints and wrinkles will be clearly photographed.

A contact surface 401 is detected by the contact surface detecting device 20 by detecting a variation in the contrast based on an image photographed by the photographing device 5 via the photographing optical system 4.

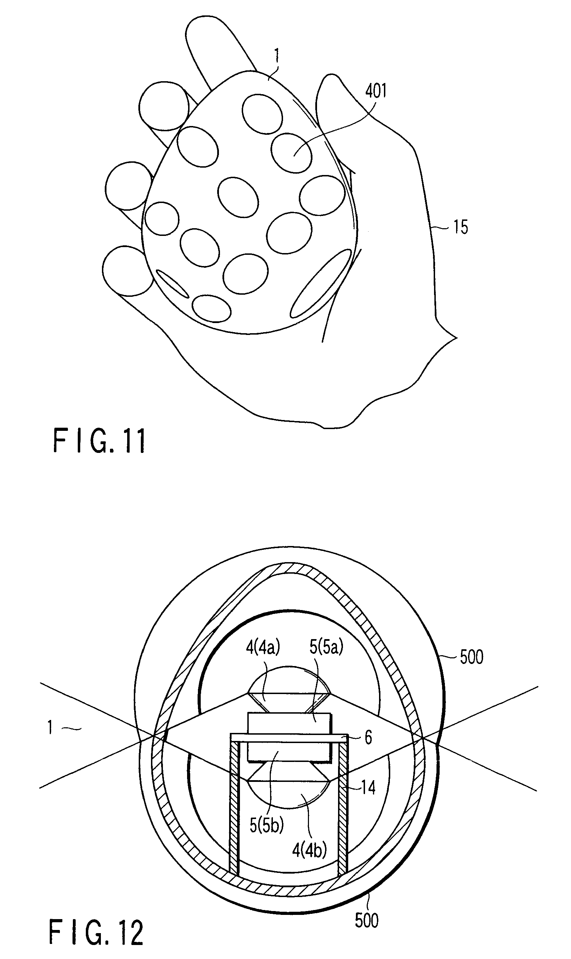

FIG. 11 shows the distribution of the contact surface 401 of the hand and fingers. The hand/finger position/pose estimation device 16 acquires the distribution as an image and estimates the position/pose of the hand and fingers. The contact area gradually increases according to force applied by the hand and fingers. Since the skin of the surface of the hand and fingers also has resiliency, the weight applied to the outer shell 2 can be estimated based on the variation thereof.

Of course, each configuration of the embodiment of this invention can be variously modified and changed. For example, in the present embodiment, in a portion which always has contrast when touch is not detected, it is determined that the diffusion surface 18 is damaged and set into a transmission state and the area thereof may be omitted from a process of estimation of the hand/finger position/pose and force estimation.

FIG. 12 is a view showing a modification of the configuration of the present embodiment. The diffusion surface 18 is provided on the outer shell 2, but as shown in the drawing, when the configuration is made to set the depth 500 of field of the photographing optical system 4 and photographing device 5 sufficiently small and set the focus on a nearer area from a neighborhood of the surface of the outer shell exterior surface 2-2 of the outer shell 2, the contact area can be detected even if the diffusion surface 18 is not provided. In this case, it is not necessary to consider the damage of the diffusion surface 18 of the surface.

Further, it is also known that blood flow in the capillary vessel changes when pressure is applied to the hand and fingers and the color of a contact surface is changed. By dealing with the area in which the color is changed as a contact surface, an increase or decrease in the force may be estimated.

Further, touch of the hand and fingers and pressure may be estimated by providing a liquid crystal heat sensitive layer used for a liquid crystal thermometer or a pressure sensitive layer (not shown) on the outer shell exterior surface 2-2 of the outer shell 2 and measuring change of color due to a temperature change caused by touch of the hand and fingers and change of color due to application of pressure by use of the photographing device 5.

Further, the configuration can be made to generate a command by measuring the transition state of a contact area in addition to the first embodiment.

### (Third Embodiment)

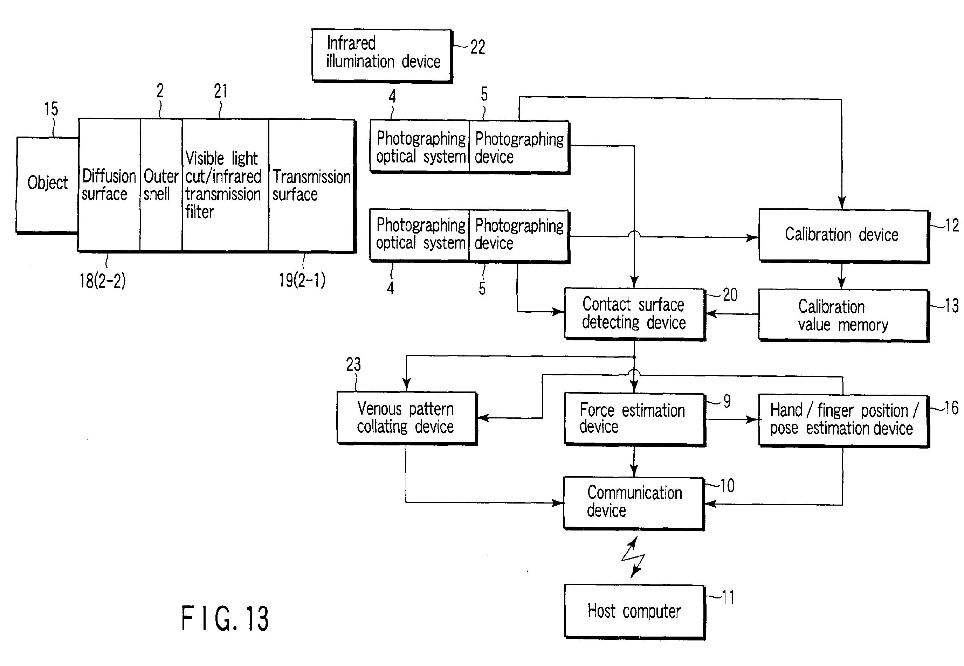

Next, a third embodiment of the human interface equipment of this invention is explained with reference to FIG. 13. The present embodiment has a feature that a venous pattern of a hand and fingers can be photographed in addition to the second embodiment. Therefore, in this case, in addition to the configuration of the second embodiment, a visible light cutting and infrared transmission filter 21 is provided on an outer shell 2 and the illumination device 7 is replaced by an infrared illumination device 22. Further, a venous pattern collating device 23 is newly added and is connected to a hand/finger position/pose estimation device 16 and contact surface detecting device 20.

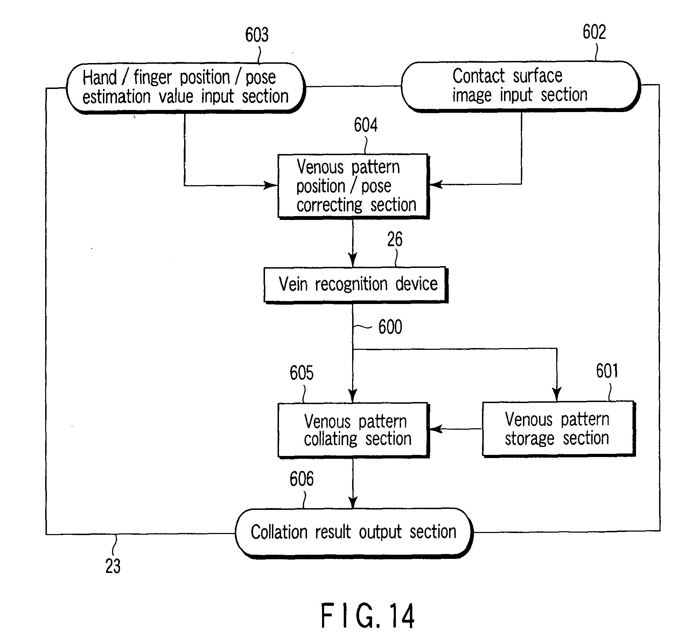

FIG. 14 is a diagram showing the configuration of the venous pattern collating device 23 which includes a vein recognition device 26, venous pattern storage section 601, contact surface image input section 602, hand/finger position/pose estimated value input section 603, venous pattern position/pose correcting section 604, venous pattern collating section 605 and collation result output section 606.

The operation of the above configuration is explained. When an object 15 touches the outer shell 2, a contact surface is detected like the second embodiment. In the present embodiment, an infrared image is used, but since the operation of the hand/finger position/pose estimation device 16 and contact surface detecting device 20 is basically the same as in the second embodiment, the detail explanation thereof is omitted here. In this case, a venous pattern 600 in the hand and fingers is also photographed at the same time by photographing with an infrared image. The position/pose of the hand and fingers is estimated by the hands position/pose estimation device 16. An image of the hand and fingers of the photographed contact surface is input from the contact surface image input section 602. Further, an estimated value of the position/pose of the hand and fingers is input from the hand/finger position/pose estimated value input section 603.

The venous pattern position/pose correcting section 604 normalizes the venous pattern 600 by correcting an image which is modified according to the position/pose and shape of the hand and fingers and captured, corrects the same into an image which coincides with the registered venous pattern and outputs it. The vein recognition device 26 estimates a position of the hand and fingers which corresponds to a portion of the contact surface 401. The venous pattern collating section 605 collates the venous pattern which coincides with each contact portion read out from the venous pattern storage section 601 with the venous pattern 600 from the vein recognition device 26. The result of collation is output from the collation result output section 606.

According to the above embodiment, the following peculiar effect is provided. That is, the vein can also be recognized in a desired grasping manner, individual authentication can be made in a natural form and a function as the human interface equipment can also be realized with a simple configuration.

Further, naturally, each configuration of the embodiment of this invention can be variously modified and altered. When vein recognition is not necessary, the venous pattern collating device 23 can be omitted and if the configuration in which the outer shell 2 and illumination device 7 of the second embodiment are modified is made, the internal structure cannot be observed by use of visible light and the exterior design can be changed.

### (Fourth Embodiment)

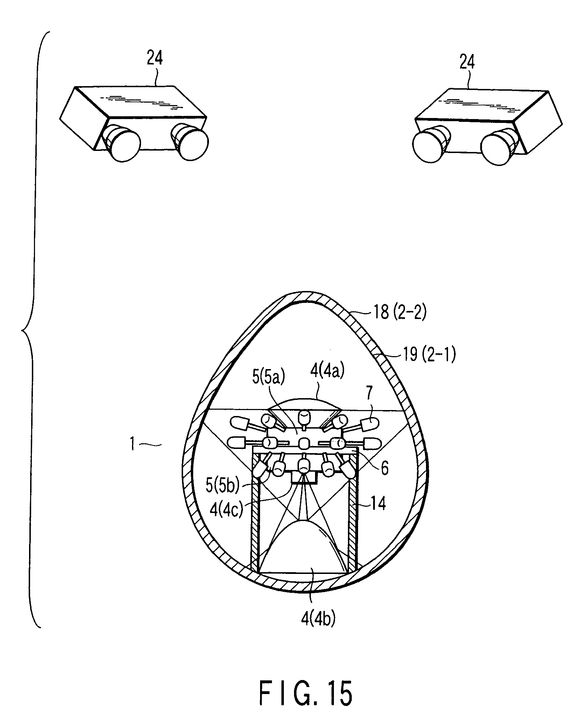

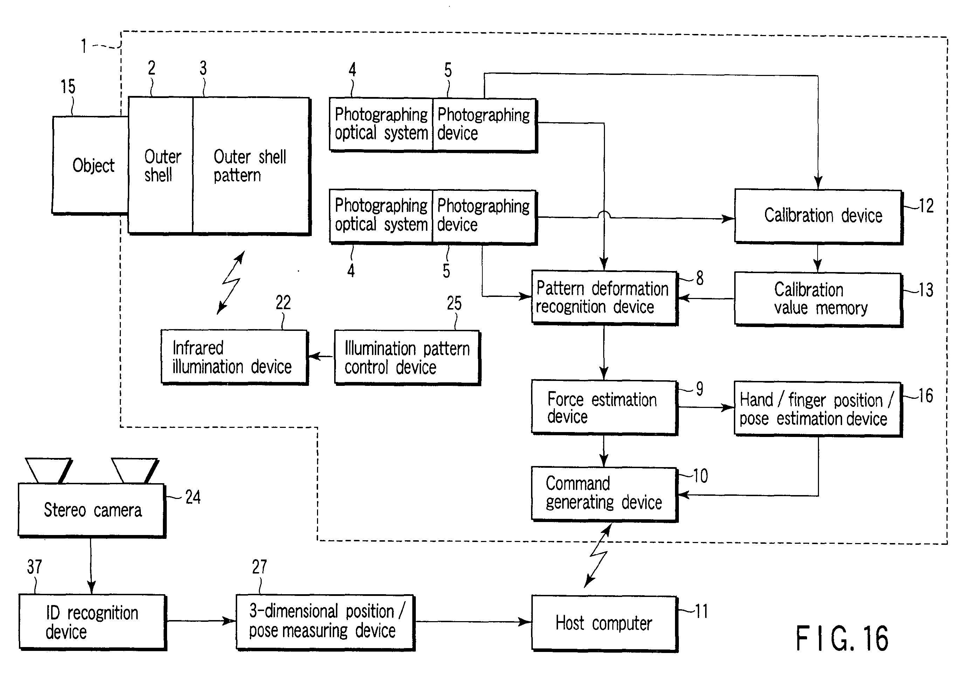

Next, a fourth embodiment of the human interface equipment of this invention is explained with reference to FIGS. 15 and 16. In this case, it is featured that the three-dimensional position/pose is measured in addition to the first, second or third embodiment. Like the modification of the second embodiment, the human interface equipment of the present embodiment has no diffusion surface and utilizes a method for detecting a contact surface based on the depth of field. Further, it has a single or a plurality of stereo cameras 24 which monitor the infrared illumination device 22 emitting infrared light used in the third embodiment from the exterior. A light emission spot array of the infrared illumination device 22 which is geometrically known and a light emission patter thereof are controlled by an illumination pattern control device 25.

An ID recognition device 37 of individual points is connected to the stereo cameras 24 and a three-dimensional position/pose measuring device 27 derives the position and pose of the human interface equipment based on the ID recognition result in the ID recognition device 37. The derivation result is input to a host computer 11. As a result, even when occlusion by the hand and fingers occurs, the three-dimensional position/pose of the human interface equipment 1 can be measured if the infrared illumination device 22 of at least three points is captured by the stereo cameras 24.

Of course, each configuration of the embodiment of this invention can be variously modified and altered. When the depth of field is utilized and the transparent outer shell 2 is used in the second embodiment, the same effect can be attained by performing the operation by use of visible light.

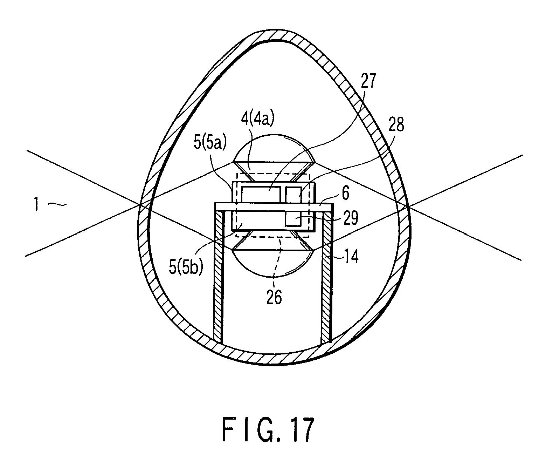

FIG. 17 is a view showing a modification of the present embodiment. In this case, it is featured that the three-dimensional position/pose is derived by containing a three-dimensional position/pose measuring device 27 which is configured by a gyro sensor 28, acceleration sensor 29 and the like in the human interface equipment 1. In this case, it is desirable to place and position the gyro sensor 28 and acceleration sensor 29 in a blind spot of a photographing optical system 4. Of course, it is also preferable to place the other constituents in a portion which does not shield the field of view of the photographing optical system 4.

A level (not shown) may be placed in a visible range of the camera as a sensor which measures the position/pose and the pose of the human interface equipment 1 in the gravitational direction may be measured by photographing a bubble position thereof. As one example, as the installation position of the level, the field of view can be effectively utilized by forming an opening in an optical axis (an area reflected and photographed by the photographing device 5 itself) of the reflection mirror and placing the level in the portion thereof. The configuration may be made to detect the pose by inserting a small amount of beads, iron spheres or colored liquid between the inner shell and the outer shell and observing the movement thereof in the gravitational direction by use of the photographing device 5.

Further, a light emission pattern may be used as an infrared communication protocol of IrDA or the like and may be used for transmission of measurement values of the hand/finger pose and the pressure distribution value of the human interface 1. The configuration can be made to control household equipments or the like by a command based on tactile sensing by setting the same in conformity to a command of an infrared remote controller.

Further, electrodes, electromyography sensor, temperature sensor or the like for measurement of a physiological amount, for example, for measurement of body fat may be provided on the exterior surface of the outer shell 2 in the case of the first embodiment, the configuration can be made to estimate the pulsation of a corresponding portion by extracting the portion corresponding to a vein of part of the image, tracking and correcting the position thereof in the case of the second and third embodiments, and thus the configuration may be made to simultaneously acquire various physiological amounts.

### (Fifth Embodiment)

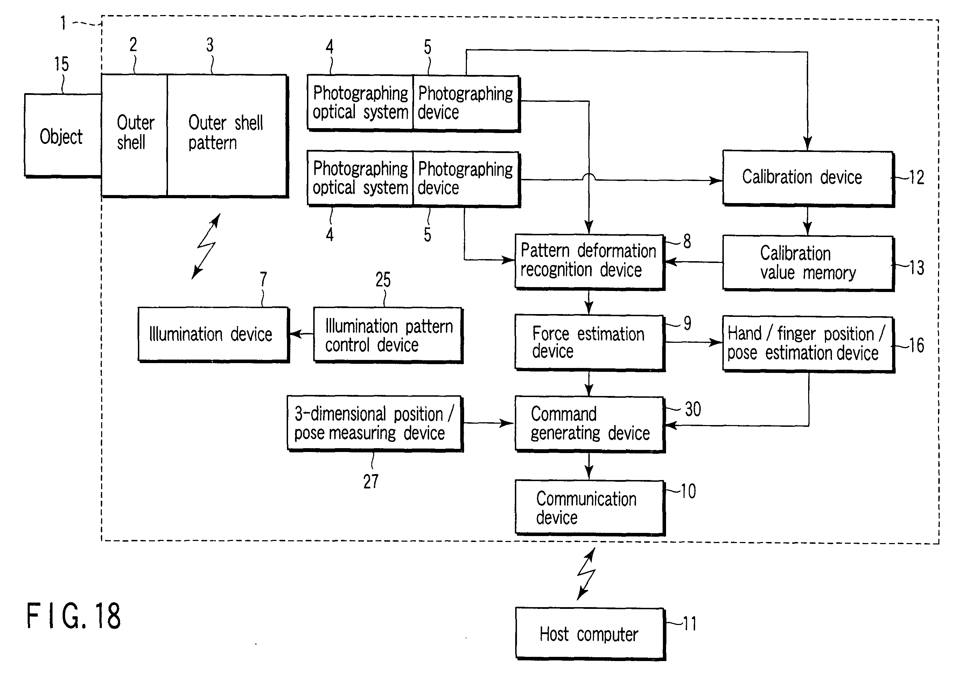

Next, a fifth embodiment of the human interface equipment of this invention is explained with reference to FIG. 18. In the present embodiment, a command generation device 30 is provided to generate and store a command. The configuration can be commonly applied to the first, second, third, fourth embodiments. The command generation device 30 is arranged between a force estimation device 9 and a communication device 10 and connected to a three-dimensional position/pose measuring device 27 and hand/finger position/pose estimation device 16.

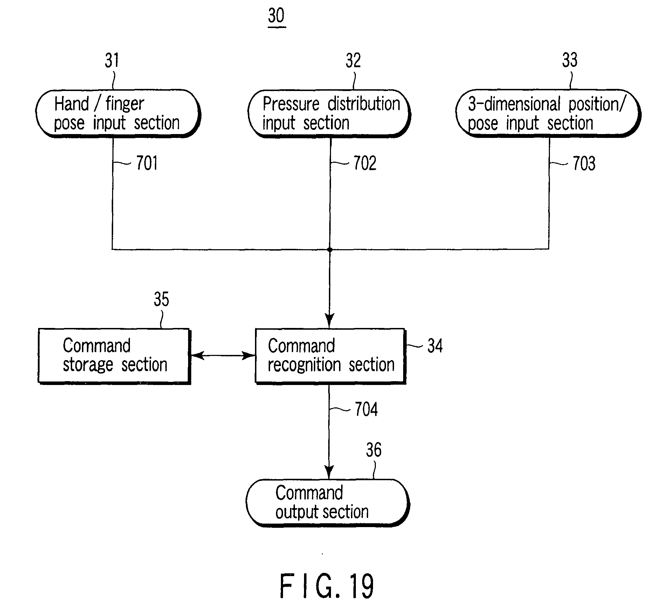

FIG. 19 shows the configuration of the command generation device 30 which includes a hand/finger pose input section 31, pressure distribution input section 32, three-dimensional position/pose input section 33, command recognizing section 34, command storage section 35 and command output section 36.

Next, the operation of the above configuration is explained. Hand/finger pose data 701 input from the hand/finger pose input section 31, pressure distribution data 702 input from the pressure distribution input section 32 and three-dimensional position/pose data 703 input from the three-dimensional position/pose input section 33 are input to the command recognizing section 34. The command recognizing section 34 compares the input data items 701, 702, 703 with a command previously set in the command storage section 35, derives a threshold based on the total sum of the whole pressures and generates a command by use of a variation in the pressure distribution of each finger based on the above result.

In this case, as one example, a case wherein a command of a mouse widely used in computers is generated is considered. The pressure value of the index finger is recognized based on the hand/finger position/pose data, normal grasping is recognized when the pressure value is not larger than the threshold, a command corresponding to left click of a mouse is recognized when the pressure value exceeds the threshold, for example, and the command is output.

Further, likewise, a command corresponding to a right click of the mouse is assigned to the middle finger. When the whole portion is strongly grasped, the pointer movement amount of the mouse is set large, and when it is lightly grasped, the movement amount is set small. Further, by assigning commands of so-called drugging and dropping or gripping and releasing an object according to the pressure values of the thumb and index finger, the above operations can be performed with natural feelings.

As a different example, for example, the present human interface equipment 1 is used for measurement of the degree of tension. In the relaxed state, the gripping force of a human is generally set in a weak state and the operation of lightly grasping an object so as not to drop the same is performed. However, in a state in which the degree of tension is enhanced or he wants to depend on something, the operation of clenching his teeth or strongly making a fist is performed. The degree of tension can be measured and it can be acquired as command data 704 of the degree of tension by measuring the pressure value based on the pressure distribution data 702 of the present human interface equipment 1.

Further, it may be generated as the command data 704 corresponding to the degree of reliability with respect to the human interface equipment 1 based on the hand/finger pose data and pressure distribution data by applying the same to a model in which the degree of reliability with respect to the present human interface equipment 1 is low when the operation of pinching the present human interface equipment 1 is performed so as to lightly grasp the same and the degree of reliability is high when it is grasped so as to be covered with the whole portion of the palm. Further, when the value of force is small based on the pressure distribution data attained at this time, for example, the human interface equipment 1 is dealt with as a weak and command data 704 indicating that there is a will of protection may be output, and when the value of force is large, command data 704 indicating that the human interface equipment 1 is regarded as an object to be dependent on may be output.

Further, the degree of tension of the movement can be measured based on the pressure distribution data and three-dimensional position/pose data of the present interface. For example, at the time of smooth movement of the low degree of tension when he has the present human interface equipment 1 and performs an aerobic dance, command data 704 indicating that a variation in the three-dimensional position/pose is less subject to a smooth and fine positional variation, it can be recognized as a relaxed state based on the pressure distribution data 702 or the like and relaxed exercise is taken is output. On the other hand, when the pressure distribution data 702 indicates a high value, a variation in the position/pose is abrupt and an unstable and shaky variation repeatedly occurs, command data 704 indicating a warning that the force is applied, for example, unreasonable force is applied and dangerous exercise which causes injury is performed is output. In this case, for example, two human interface equipments 1 can be held in two hands.

Of course, each configuration of the embodiment of this invention can be variously modified and altered. For example, the command generation device 30 for command generation may be contained in the human interface equipment 1 as in the present embodiment or may be realized as a program in the host computer 11.

The above embodiments in which several methods are used for detection of the position and pressure of the hand and fingers are explained, but the configuration may be made to detect pressure distribution by arranging pressure sensors, for example, FSR sensors (made by Interlink Electronics Co.) or the like using conductive rubber in a matrix form between the inner shell and the outer shell. Further, part of the pressure sensors may be partially arranged for pressure detection of substantially the egg-shaped top portion and bottom surface in which the outer shell is difficult to be deformed and the value thereof may be used in a complementary fashion. In this case, an output of the pressure sensor is used for recognition of the hand/finger position/pose as a value of the pressure distribution.

So far, a case wherein the present human interface equipment 1 is used as an input device has been explained, but feedback corresponding to the output of the command data or output information from the host computer 11 may be presented by containing a pendulum by an eccentric motor, for example. For example, by providing an air valve and compressor (not shown) on the outer shell, it may be caused to have a variation in the hardness due to air pressure and used as a device for output of hardness. In this case, a correction amount corresponding to air pressure for calibration data may be provided since the relation between a deformation amount and pressure by the hand and fingers is changed.

Further, calibration for a threshold value of pressure can be performed by use of the individual authentication result by use of a vein or generation of command data 704 relating to a plurality of persons may be customized. The size of the human interface equipment 1 is constant, but the size of the hand and fingers of the operator is different between individuals. Customization can be attained by taking the difference between individuals into consideration and storing a variation in the pressure distribution at the time of command generation in the command storage section 35.

Further, a configuration can be made to enhance the probability of recognition based on the input history of discriminated commands according to the individual authentication result by use of a vein or the like or adaptively learn a variation in the command input of the operator with time (for example, a variation in the exercise ability or growth of a child). By using the above configuration, the human interface equipment 1 which can more highly estimate even emotion of the operator can be simply attained.

### (Additional Remark)

1. A human interface equipment comprising:
   an outer shell,
   a photographing device which is arranged inside the outer shell and photographs a neighborhood of the outer shell via a photographing optical system, and
   a variation recognition device which recognizes a variation in an image photographed by the photographing device.

### (Corresponding Embodiment of this Invention)

The embodiment relating to this invention corresponds to the first and second embodiments. In this embodiment, the photographing optical system corresponds to a fisheye lens or hyperboloid mirror, but two optical systems may be configured by the same type and a conical surface or paraboloid, free curved surface or the like can be contained instead of the hyperboloid.

### (Operation)

A variation of a subject is input by recognizing a variation in an image photographed by the outer shell and the photographing device having the photographing optical system contained therein by use of the variation recognition device.

### (Effect)

In order to make a photograph from inside the human interface, for example, a hand and fingers which grasp the human interface or the interior surface of the outer shell can be photographed without being shielded by a shielding member and input of gesture by the way of grasping by the hand and fingers can be effectively recognized. Further, since a movable portion such as a bending sensor is not provided, the characteristic that a fault is difficult to occur is provided.
2. The human interface equipment described in "1" in which the depth of field of the photographing optical system is limited to a neighborhood of the outer shell.

### (Operation)

The depth of field is set near the outer shell.

### (Effect)

Since something other than the required subject near the outer shell can be set outside the depth of field, recognition of a variation of the subject can be limited to a neighborhood of the outer shell and can be more simply performed.
3. The human interface equipment described in "1" in which the outer shell is configured by a resilient material and a preset pattern is drawn on the interior surface thereof.

### (Corresponding Embodiment of this Invention)

The embodiment relating to this invention corresponds to the first embodiment.

### (Operation)

A pattern formed on the outer shell is photographed by the photographing device via the photographing optical system and deformation of the outer shell is derived by the deformation recognition device based on the image.

### (Effect)

A human interface equipment which can detect a contact state of substantially the whole surface of the outer shell based on a deformation amount by using a plurality of photographing devices can be obtained.
4. The human interface equipment described in "3" in which the photographing device photographs the pattern and the deformation recognition device is a deformation recognition device which measures deformation of the pattern photographed by the photographing device.

### (Operation)

A pattern drawn on the interior surface of the outer shell is photographed by the photographing device.

### (Effect)

Since only a known pattern can be photographed without being influenced by a shielding member, distortion of a pattern caused by deformation of the outer shell can be more preferably photographed and a variation in the outer shell can be recognized.
5. The human interface equipment described in "4" in which the human interface equipment further comprises a force estimation device which estimates force applied to the outer shell based on a deformation amount measured by the deformation recognition device.

### (Corresponding Embodiment of this Invention)

The embodiment relating to this invention corresponds to the first embodiment. In this embodiment, the photographing optical system in the configuration corresponds to a fisheye lens or hyperboloid mirror, but two optical systems may be configured by the same type and a conical surface or paraboloid, free curved surface or the like can be contained instead of the hyperboloid. Further, the force also contains pressure.

### (Operation)

A pattern formed on the outer shell is photographed by the photographing device via the photographing optical system and deformation of the outer shell is derived by the deformation recognition device based on the image and force distribution is derived based on the deformation amount by the force estimation device.

### (Effect)

A human interface equipment which can detect the contact weight of substantially the whole surface of the outer shell and the distribution thereof by using a plurality of photographing devices can be obtained.
6. The human interface equipment described in "1" in which the photographing optical system is configured by a fisheye lens.

### (Operation)

The interior surface of the outer shell is photographed by the fisheye lens.

### (Effect)

Since photographing is performed by the fisheye lens, a distortion image of a pattern of the all-sky circumference can be obtained from the optical axis direction, and since substantially a spherical shell is photographed at substantially the equidistance, it also becomes advantageous in the respect of aberration and the respect of the depth of field.
7. The human interface equipment described in "1" in which the photographing optical system is configured by a reflection mirror having a reflection surface of one of a hyperboloid, paraboloid and conical surface and an image-forming lens.

### (Operation)

A pattern of the outer shell is photographed as a panoramic circumferential image by a hyperboloid full-circumference mirror.

### (Effect)

Since a wide-angle full-circumferential image can be obtained by a simple optical configuration and substantially a spherical shell is photographed at substantially the equidistance, it becomes advantageous in the respect of aberration and the respect of the depth of field.
8. The human interface equipment described in "1" which comprises a hand/finger position/pose estimation device which estimates the shape of a hand and fingers based on deformation of the outer shell.

### (Operation)

A pattern distorted by deformation of the outer shell is photographed and thus the shape of the hand and fingers is estimated based on force distribution estimated by force estimation means.

### (Effect)

The position of the hand and fingers which grasp the human interface equipment can be estimated.
9. The human interface equipment described in "1" which comprises an inner shell formed of a transmission material inside the outer shell and harder than the outer shell.

### (Operation)

The inner shell stops excessive deformation of the outer shell.

### (Effect)

The photographing device, illumination device and the like are protected by the inner shell. Further, since the inner shell is formed of the transmission material, photographing is not obstructed.
10. The human interface equipment described in "1" in which the exterior surface of the outer shell is a diffusion surface and the interior surface is a transmission surface.

### (Corresponding Embodiment of this Invention)

The embodiment relating to this invention corresponds to the second embodiment. In this embodiment, the photographing optical system in the configuration corresponds to a fisheye lens or hyperboloid mirror, but two optical systems may be configured by the same type and a conical surface or paraboloid, free curved surface or the like can be contained instead of the hyperboloid.

### (Operation)

The outer shell having an exterior surface of a diffusion surface and an interior surface of a transmission surface is illuminated by the illumination device, a neighborhood of the outer wall surface is photographed by the photographing optical system, a subject such as the hand and fingers which touch the outer wall surface is photographed by the photographing device, an area of the hand and fingers closely adhered is detected by the contact surface detecting device, and force applied to the outer shell is estimated by the force estimation device based on an increase or decrease in the contact surface.

### (Effect)

Force can be estimated by use of resiliency of the hand and fingers by detecting an area in which the hand and fingers touch the exterior surface of the outer shell by an image of the hand and fingers and the like pressed against the diffusion surface and an image of the hand shape can be simultaneously photographed.
11. The human interface equipment described in "10" in which the human interface equipment comprises a contact surface detecting device which detects touch of the hand and fingers and the like closely adhered to the outer shell based on a variation in an image recognized by the variation recognizing device, and a force estimation device which estimates force applied to the outer shell based on the variation in the image.

### (Operation)

The exterior surface of the outer shell is formed into a diffusion surface such as frosted glass, a variation in the image of the hand/finger portion closely adhered to the diffusion surface is input to the contact surface detecting device to recognize a contact surface and force applied to the outer shell is estimated by the force estimation device.

### (Effect)

The contact surface of the hand and fingers can be easily detected by emphasizing a closely adhered surface of the hand and fingers and the like by the diffusion surface and detecting the corresponding portion by the contact surface detecting device.
12. The human interface equipment described in "10" in which the photographing optical system is configured by a fisheye lens.

### (Operation)

The exterior surface of the outer shell is photographed by the fisheye lens.

### (Effect)

Since photographing is performed by the fisheye lens, a distortion image of the a-11-sky circumference can be obtained from the optical axis direction, and since substantially a spherical shell is photographed at substantially the equidistance, it also becomes advantageous in the respect of aberration and the respect of the depth of field.
13. The human interface equipment described in "10" in which the photographing optical system is configured by a reflection mirror having a reflection surface of one of a hyperboloid, paraboloid and conical surface and an image-forming lens.

### (Operation)

The exterior surface of the outer shell is photographed as a panoramic circumferential image by a hyperboloid full-circumference mirror.

### (Effect)

Since a wide-angle full-circumferential image can be obtained with a simple optical configuration and substantially a spherical shell is photographed at substantially the equidistance, it becomes advantageous in the respect of aberration and the respect of the depth of field.
14. The human interface equipment described in "10" which includes a hand/finger position/pose estimation device which estimates a contact shape of the hand and fingers based on a pattern of a contact surface and a photographed image.

### (Operation)

The position, pose and the like of the hand and fingers are estimated based on a touched portion and photographed hand/finger image.

### (Effect)

The way of grasping the human interface equipment can be measured.
15. The human interface equipment described in "10" in which the outer shell is configured by a visible light cut filter which passes infrared rays and illumination light of the illumination device is infrared rays.

### (Corresponding Embodiment of this Invention)

The embodiment relating to this invention corresponds to the third embodiment.

### (Operation)

The illumination device which illuminates the outer shell emits infrared rays to illuminate the contact surface of the hand and fingers and prevent visible light from being passed by the visible light cut filter of the outer shell.

### (Effect)

The hand/finger position/pose and pressure can be measured as if it does not look that visible light is emitted. Further, the internal structure can be shielded.
16. The human interface equipment described in "1" in which a command is generated based on at least one of deformation or force distribution.

### (Corresponding Embodiment of this Invention)

The embodiment relating to this invention corresponds to the first, second embodiments.

### (Operation)

A command is generated based on deformation, force distribution.

### (Effect)

An input corresponding to sensitivity or input of non-language can be provided by generating a command according to the way of grasping the human interface equipment or the way of applying force.
17. The human interface equipment described in "1" in which a command is registered or learned based on at least one of deformation or force distribution.

### (Corresponding Embodiment of this Invention)

The embodiment relating to this invention corresponds to the first, second embodiments.

### (Operation)

A command is registered, learned based on deformation, force distribution.

### (Effect)

An input corresponding to sensitivity corresponding to the individual or input of non-language can be provided by registering or learning a command according to the way of grasping the human interface equipment or the way of applying force.
18. The human interface equipment described in "1" which further comprises a position/pose detection device which detects three-dimensional position/pose.

### (Corresponding Embodiment of this Invention)

The embodiment relating to this invention corresponds to the fourth, fifth embodiments.

### (Operation)

The position/pose of the human interface itself is input in addition to the pressure distribution, position/pose of the hand and fingers.

### (Effect)

A variation in the position/pose can be input at the same time as the pressure distribution, position/pose of the hand and fingers.
19. The human interface equipment described in "15" which comprises a venous pattern detecting section which detects a venous pattern of a palm and a hand and fingers, a venous pattern correcting section which normalizes a detected venous pattern, and a venous pattern collating section which collates the corrected venous pattern with a previously registered venous pattern.

### (Corresponding Embodiment of this Invention)

The embodiment relating to this invention corresponds to the third, fifth embodiments.

### (Operation)

Venous pattern photographing by infrared photographing is acquired by the photographing device via the photographing optical system, a venous pattern is detected by the venous pattern detecting section, a venous pattern normalized by the venous pattern correcting section which corrects distorted venous pattern data based on the estimation result of the hand/finger pose is acquired and this is collated with a previously registered venous pattern in the venous pattern collating section.

### (Effect)

The measurement which grasps calibration data, habit and the like of the operator can be made by performing collation and a human interface equipment suitable to the individual can be provided.
20. A human interface equipment comprising:
   an outer shell, a photographing device which is placed inside the outer shell and photographs a neighborhood of the outer shell via a photographing optical system, and a variation recognition device which recognizes a variation in an image photographed by the photographing device.

(Corresponding Embodiment of this Invention), (Operation), (Effect) of this configuration are the same as in "1".

### Industrial Applicability

According to this invention, a human interface equipment which can recognize a variation in an image without being shielded by a shielding member by use of a small number of sensors.

Further, according to this invention, a human interface equipment which can attain authentication and interface by the same device is provided.

## Claims

1. A human interface equipment comprising:
an outer shell,
a photographing device which is arranged inside the outer shell and photographs a neighborhood of the outer shell via a photographing optical system, and
a variation recognition device which recognizes a variation in an image photographed by the photographing device.

2. The human interface equipment according to claim 1, wherein the depth of field of the photographing optical system is limited to a neighborhood of the outer shell.

3. The human interface equipment according to claim 1, wherein the outer shell is formed of a resilient material and a preset pattern is drawn on the interior surface thereof.

4. The human interface equipment according to claim 3, wherein the photographing device photographs the pattern, and the variation recognition device is a deformation recognition device which measure deformation of the pattern photographed by the photographing device.

5. The human interface equipment according to claim 4, wherein the human interface equipment further comprises a force estimation device which estimates force applied to the outer shell based on a deformation amount measured by the deformation recognition device.

6. The human interface equipment according to claim 1, wherein the photographing optical system is configured by a fisheye lens.

7. The human interface equipment according to claim 1, wherein the photographing optical system is configured by a reflection mirror having a reflection surface of one of a hyperboloid, paraboloid and conical surface, and an image-forming lens.

8. The human interface equipment according to claim 1, which includes a hand/finger position/pose estimation device which estimates a shape of a hand and fingers based on deformation of the outer shell.

9. The human interface equipment according to claim 1, which has an inner shell formed of a transmission material and harder than the outer shell inside the outer shell.

10. The human interface equipment according to claim 1, wherein the exterior surface of the outer shell is a diffusion surface and the interior surface is a transmission surface.

11. The human interface equipment according to claim 10, wherein the human interface equipment includes a contact surface detecting device which detects touch of a hand and fingers closely adhered to the outer shell based on a variation in an image recognized by the variation recognition device, and a force estimation device which estimates force applied to the outer shell based on a variation in the image.

12. The human interface equipment according to claim 10, wherein the photographing optical system is configured by a fisheye lens.

13. The human interface equipment according to claim 10, wherein the photographing optical system is configured by a reflection mirror having a reflection surface of one of a hyperboloid, paraboloid and conical surface, and an image-forming lens.

14. The human interface equipment according to claim 10, which comprises a hand/finger position/pose estimation device which estimates a contact shape of a hand and fingers based on a pattern of a contact surface and a photographed image.

15. The human interface equipment according to claim 10, wherein the outer shell is formed of a visible light cut filter which transmits infrared rays and illumination light of the illumination device is infrared rays.

16. The human interface equipment according to claim 1, which generates a command based on at least one of deformation or force distribution.

17. The human interface equipment according to claim 1, which registers or learns a command based on at least one of deformation or force distribution.

18. The human interface equipment according to claim 1, which further comprises a position/pose detecting device which detects three-dimensional position/pose.

19. The human interface equipment according to claim 15, which comprises a venous pattern detecting section which detects a venous pattern of a palm and a hand and fingers, a venous pattern correcting section which normalizes a detected venous pattern, and a venous pattern collating section which collates the corrected venous pattern with a previously registered venous pattern.

20. A human interface system comprising:
an outer shell,
a human interface equipment which includes a photographing device which is arranged inside the outer shell and photographs a neighborhood of the outer shell via a photographing optical system, and a variation recognition device which recognizes a variation in an image photographed by the photographing device, and
a communication device.
